**Europäisches Patentamt**

**European Patent Office**

**Office européen des brevets**

(19)

(11) Publication number: **0 115 153**
**A2**

(12) # EUROPEAN PATENT APPLICATION

(21) Application number: **83307711.8**

(22) Date of filing: **19.12.83**

(51) Int. Cl.³: **F 02 B 27/00**

(30) Priority: **24.12.82 GB 8236758**

(43) Date of publication of application:
**08.08.84 Bulletin 84/32**

(84) Designated Contracting States:
**BE DE FR GB IT SE**

(71) Applicant: **FORD MOTOR COMPANY LIMITED**
**Eagle Way**
**Brentwood Essex CM13 3BW(GB)**

(84) Designated Contracting States:
**BE GB IT SE**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(72) Inventor: **Ma, Thomas Tsoi-Hei**
**96 Hamberts Road**
**South Woodham Ferris Chelmsford Essex(GB)**

(74) Representative: **Messulam, Alec Moses et al,**
**A. Messulam & Co. 24 Broadway**
**Leigh on Sea Essex SS9 1BN(GB)**

(54) **Intake manifold for an internal combustion engine.**

(57) The invention relates to an induction manifold for a dry-manifold internal combustion engine which comprises a rigid plenum chamber 10, intake pipes 14 extending from the plenum chamber 10 to the individual engine cylinders, and extensions 16 of the individual intake pipes 14 disposed within the plenum chamber 10. To achieve broad band tuning without the need for movable parts, each extension 16 within the plenum chamber 10 is formed with at least one aperture 2.

FIG. 2 .

# INTAKE MANIFOLD FOR AN INTERNAL COMBUSTION ENGINE

The present invention relates to an induction manifold for a dry-manifold internal combustion engine, comprising a plenum chamber, a throttle commom to all the cylinders of the engine arranged in an air intake of the plenum chamber, connection pipes of predetermined length extending from the plenum chamber to the individual engine cylinders, and extensions of the individual pipes disposed within the plenum chamber and having substantially the same cross sectional area as the connection pipes.

In the tuning of motor vehicles, it has already been appreciated that the length of an induction pipe leading to a cylinder has a significant effect on the power and that by appropriate selection of the length of the induction pipe the performance can be optimised for a particular engine speed.

Usually, the lengths required are quite long and because an induction manifold needs to be rigid in order to withstand vacuum pressure conventional tuned manifolds have required long rigid coils. Such a construction in unacceptable for commercial motor vehicles since it clutters the engine compartment, creates design difficulties and makes for difficult servicing.

In GB-PS 2,049,036 A, there is described a manifold of the type described above in which a the manifold may be tuned for maximum power at a different engine speed by changing the extension for extensions of a different length. This however does not improve the overall efficiency of the engine but merely alters its performance characteristics.

The present invention seeks to provide a manifold for a dry-manifold engine which may be tuned for a range of engine speeds without the need for moving parts and while retaining the advantage of easy installation in an engine compartment.

In accordance with the present invention, there is provided an induction manifold for a dry-manifold internal combustion engine, comprising a plenum chamber, a throttle commom to all the cylinders of the engine arranged in an air intake of the plenum chamber, connection pipes of predetermined length extending from the plenum chamber to the individual engine cylinders, and extensions of the individual pipes disposed within the plenum chamber and having substantially the same cross sectional area as the connection pipes, each extension incorporating at least one aperture.

In practice, only the plenum chamber and the intake pipes need to be made of a material strong enough to withstand the intake vacuum and the extensions of the intake pipes disposed within the plenum chamber can be made of a semi-rigid material which can be flexibly disposed and stored within the plenum chamber.

The extensions can thus be of any length necessary to tune the intake manifold and the length of the individual intake pipes can be varied at will without altering the external configuration and layout of the intake manifold. Furthermore, because the extensions can be neatly packaged within the plenum chamber, they need not interfere with access to the engine, for example when servicing.

The throttle for the air intake is connected within the air supply pipe to the plenum chamber with the result that the intake manifold vacuum pressure prevails all through the plenum chamber. Thus, the pressures inside and outside the extensions of the individual intake pipes disposed within the plenum chamber are substantially equal and it is this equalisation of the pressure which permits the extensions to be made of a semi-rigid material. Nevertheless, the pipes serve to confine the pressure waves travelling towards the engine cylinder and the length of the pipes affect the timing of these pressure waves. At the optimum length, a compression wave reaches the inlet port of the cylinder at a time coinciding with the closing of the valve to ensure the intake charge pressure is maximised just when the inlet valve closes, thereby ensuring the maximum admission of charge into the cylinder for combustion.

In order for the manifold to be tuned at more than one engine speed, arrangements using telescopically collapsible manifolds have been proposed. Such an arrangement is described in GB-PS 1175792. However, the mechanism for such adjustment is complicated.

When two pipes are placed end to end, then if the gap between them is negligible the effective length of the intake pipe is the combined length of the two pipes. On the other hand, if the gap is large then only the first pipe will be effective. These two effective intake pipe lengths correspond to two tuned conditions which are optimum for two different engine speeds. The effect of progressively widening the gap from a fully closed position to a fully open position, as one may deduce empirically, is to cause a gradual shift from one tuned condition to the other and one can, by appropriate dimensioning of the gap, achieve broad band tuning which retains substantially the performance from both the tuned conditions but without the complication of moving parts.

Thus, in the invention, the extensions of the intake pipes arranged within the plenum chamber include at least one aperture in order to provide such broad band tuning.

GB-PS 1,094,877 and GB-PS 1,423,450 both show arrangements in which an aperture is formed in an inlet manifold pipe. In the former reference the induction pipe is arranged upstream of the carburetor and latter reference a throttle is arranged between the induction pipe and the engine cylinder. The invention differs from this prior art in that the surrounding plenum chamber in the invention is under vacuum pressure whereas in the prior art the pressure surrounding the induction pipes is substantially atmospheric. It is noted furthermore that the invention may only be used with a dry-manifold engine as fuel may separate from the inducted air if introduced into a manifold of the invention. The term "dry-manifold" is intended to include any fuelling system where the fuel path and the air path do not join one another until after the air has passed through the induction manifold, for example fuel injection.

Thus the invention provides a manifold capable of being neatly packaged by virtue of the fact that the extensions within the plenum chamber may be flexible, and also providing broad band tuning without the need for movable parts.

The invention will now be described further, by way of example, with reference to the accompanying drawings, in which:

Figure 1 is a perspective schematic view of an intake manifold illustrating the basic concept of the invention, and

0115153

Figure 2 shows a section through an intake manifold having an extension in the form of two fixed sections within the plenum chamber arranged in series and mounted with a controlled gap between the sections to achieve broad band tuning.

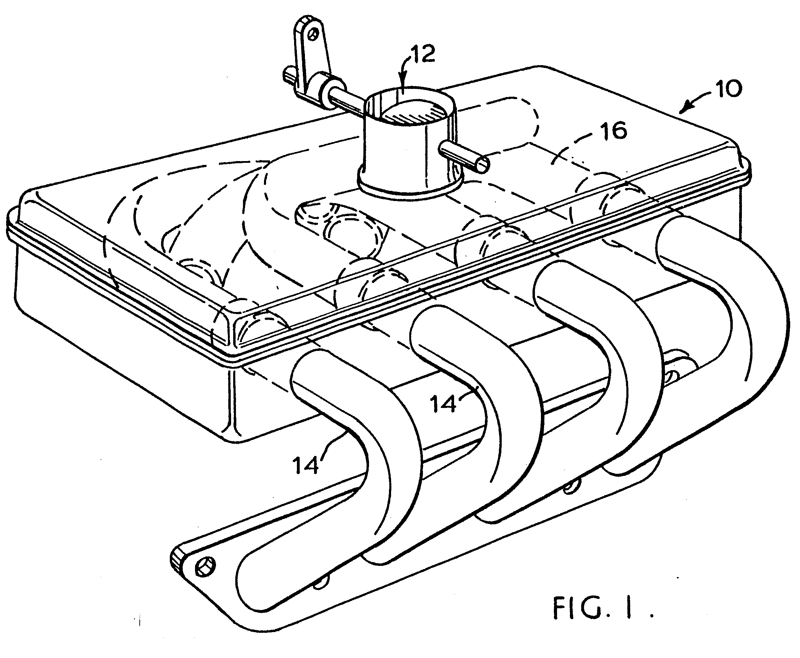

In Figure 1, there is shown an intake manifold which comprises a plenum chamber 10 with an intake butterfly valve 12. The plenum chamber 10 is connected to four intake pipes 14 which lead to the cylinder block. Each of the intake pipes 14 has within the plenum chamber 10 an extension 16, the walls of which need not be capable of withstanding the full manifold pressure.

Thus, each intake branch is a tuned length which includes a joint disposed within a common plenum chamber 10. A substantial proportion of each tuned length is packaged within the plenum chamber 10. This is quite acceptable for a fuel injection manifold since there is no fuel in the plenum chamber and air will find its way to each branch automatically. The plenum chamber 10 is designed to withstand boost or vacuum but the tuned extensions are not subjected to any pressure or vacuum load. It is for this reason that only the portions 14 of the intake pipes lying outside the plenum chamber 10 need be of rigid construction.

This arrangement makes is easy to accommodate a complex manifold system inside a simple box structure which fits readily in the engine compartment. There is complete freedom in the arrangement of the extensions 16 as long as they are confined within the plenum chamber. For example, each enclosed extension 16 may be easily interchangeable with another extension so as to match its tuned length with any engine specification. Alternatively, each extension can be broken into a number of sections which can be coupled together in a number of configurations to make up different tuned lengths selectable according to a predetermined engine requirement schedule. The joints between these sections and the joints with the outside branches can be of simple construction which need not be completely leakproof since the joints are still enclosed within the plenum chamber 10.

The enclosed extensions can be made in a plastics or other suitable material, they may be flexible or semi-flexible and they may carry a number of branches and mechanical parts freely supported within the confines of the plenum chamber.

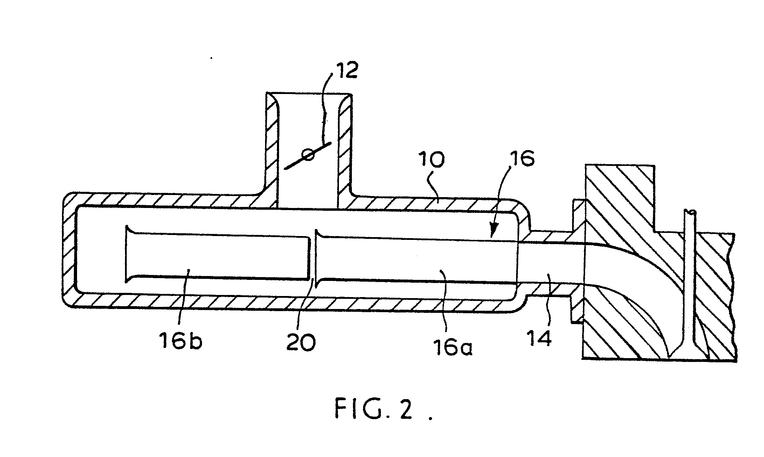

In Figure 2, there is shown schematically an embodiment in which each of the extensions 16 within the plenum chamber 10 is formed of two sections 16a and 16b. These are fixed relative to one another with an aperture 20 being left between the two sections. The dimensions of the apertures 20 are accurately predetermined to provide broad band tuning of the manifold.

The aperture 20 in the embodiment of Figure 2 is constituted by a gap between two sections but it is alternatively possible to form slots in a single tube to achieve a similar effect.

**CLAIMS**

1.    An induction manifold for a dry-manifold internal combustion engine, comprising a plenum chamber (10), a throttle (12) commom to all the cylinders of the engine arranged in an air intake of the plenum chamber, connection pipes (14) of predetermined length extending from the plenum chamber (10) to the individual engine cylinders, and extensions (16) of the individual pipes disposed within the plenum chamber (10) and having substantially the same   cross sectional area as the connection pipes (14),   characterised   in that each extension (16) incorporates at least one aperture (20).

FIG. I .

FIG. 2 .